# EUROPEAN PATENT APPLICATION

(11) **EP 4 468 039 A1**
(43) Date of publication of application: **27.11.2024**
(21) Application number: 23175096.9
(22) Date of filing: 24.05.2023
(51) Int. Cl.: G01S 19/22, G01S 19/42

(54) **SATELLITE-BASED POSITIONING**

(71) Applicant: Hexagon Technology Center GmbH, 9435 Heerbrugg (CH)
(72) Inventor: BADE, Nicholas, 9443 Widnau (CH); LOPEZ FERNANDEZ, Luis, 9403 Goldach (CH); REIMANN, Bernd, 9435 Heerbrugg (CH); METZLER, Bernhard, 6850 Dornbirn (AT)
(74) Representative: Kaminski Harmann

(57) **Abstract**

Method for processing satellite signals to derive a geospatial position, comprising: receiving, via a GNSS antenna (1), a plurality of GNSS signals (20-22) from a plurality of GNSS satellites (2); capturing a digital image using an imaging device at least partially oriented toward the plurality of GNSS satellites, the digital image comprising a multitude of pixels, a first subset of pixels imaging the sky, and a second subset of pixels imaging obstructions that are at least partly impermissible to GNSS signals and/or have reflective surfaces; determining an orientation of the image; and computing a geospatial position, wherein the method further comprises, for each of at least a subset of the plurality of GNSS satellites: extracting signal features from the respective GNSS signal; processing the image to extract image features; combining the extracted signal features and the extracted image features to receive a feature combination; and deriving, based on feature combinations of a plurality of GNSS satellites and by applying machine learning, a signal classification and/or an estimated local error of the respective GNSS signal, wherein computing the geospatial position is based at least on a subset of the GNSS signals and on the signal classification and/or the estimated local error of each GNSS signal of the subset.

## Description

The present invention generally pertains to determining a current position of a device using signals of a global navigation satellite system (GNSS). More specifically, the invention pertains to classifying a quality of the GNSS signals to allow determining the position more precisely.

GNSS positioning in open sky environments is an established, accurate and reliable technology. However, it is well known that GNSS signals may be reflected (or deflected) and diffracted by certain surfaces. This may lead to a reception of multipath or diffracted GNSS signals, which adversely affects positioning performance if these signals are not treated properly. Methods and system according to the present invention therefore include detection of multipath or diffracted GNSS signals. These signals may be classified according to their quality, and/or "local errors" of these signals may be estimated, so that, advantageously, the positioning accuracy may be improved.

Multipath signals and diffracted signals may include line-of-sight (LOS) and non-line-of-sight (NLOS) signals. NLOS signal propagation occurs outside of the typical line of sight between the transmitter and receiver, such as in ground reflections. Obstacles that commonly cause NLOS propagation include buildings, trees, hills, mountains, and, in some cases, high voltage electric power lines. Some of these obstructions reflect certain signal frequencies, while others absorb or corrupt the signals.

In the case of GNSS signals that are used for determining geo-spatial positions, reflected signals may pose a problem. Reflected (multipath) signals have a longer travelling distance than the direct signals and thus may lead to wrong assumptions of the GNSS receiving device regarding its position. GNSS products are often used in the vicinity of signal obstructions like trees and buildings. Therefore, improved positioning performance in these challenging environments is a desired feature.

Detecting multipath and NLOS signals remains a challenging problem for conventional GNSS technologies. In some solutions, cameras (including fish-eye and infrared cameras) combined with computer vision (CV) techniques have been used to detect NLOS signals, which are subsequently excluded or down-weighted in the positioning solution.

For instance, US 2022/0018973 A1 discloses an approach for determining NLOS GNSS signals, wherein a camera that is oriented towards the GNSS satellites is used to determine whether the satellites have a line-of-sight or not, which then allows distinguishing LOS signals from NLOS signals. The solution described by US 2022/0018973 A1 includes segmenting an image captured by the camera according to radiofrequency (RF) characteristics.

Disadvantageously, the performance of the visual approach can be limited by prevailing weather and illumination conditions; it is thus not suitable for all applications.

It is therefore an object of the present invention to provide an improved method and an improved system for deriving a geospatial position based on GNSS signals.

It is a particular object to provide such a method and system that allow a better positioning in difficult areas such as urban canyons or forests.

It is a particular object to provide such a method and system that allow a better positioning in poor lighting conditions, such as at night or during fog or rainfall.

At least one of these objects is achieved by the method according to claim 1, the system according to claim 17, and/or the dependent claims of the present invention.

The present application proposes a "hybrid" approach to filter detected NLOS GNSS signals or to estimate a local error of the detected signal. A local error is an error due to local effects such as diffraction and multipath (MP) and can be expressed as a double or single difference residual. The proposed "hybrid" approach is a fusion of the image-based and the signal-based approaches. This comprises combining the GNSS signals with additional visual information, such as a panoramic 360° camera image. Artificial intelligence is applied to estimate signal quality, which can be used to exclude certain signals or apply a weighting process to the signals.

A first aspect of the invention pertains to a computer-implemented method for processing satellite signals to derive a geospatial position, particularly fully automatically and in real time. The method comprises:
- receiving, via a GNSS antenna, a plurality of GNSS signals from a plurality of GNSS satellites;
- capturing a digital image using an imaging device at least partially oriented toward the plurality of GNSS satellites, the digital image comprising a multitude of pixels, a first subset of pixels imaging the sky, and a second subset of pixels imaging obstructions that are at least partly impermissible to GNSS signals and/or have reflective surfaces;
- determining an orientation of the image; and
- computing a geospatial position.

According to this aspect of the invention, the method further comprises, for each of at least a subset of the plurality of GNSS satellites:
- extracting signal features from the respective GNSS signal;
- processing the image to extract image features, wherein processing the image comprises (a) using image segmentation, and/or (b) applying machine learning to compute an image feature vector or an image embedding vector for at least a third subset of pixels of the image, the third subset of pixels being defined based on a position of the respective GNSS satellite;
- combining the extracted signal features and the extracted image features to receive a feature combination; and
- deriving, based on feature combinations of a plurality of GNSS satellites and by applying machine learning, a signal classification and/or an estimated local error of the respective GNSS signal.

Computing the geospatial position is then based at least on a subset of the GNSS signals and on the signal classification and/or the estimated local error of each GNSS signal of the subset.

The subsets of pixels should be understood as not being exclusive. In particular, each pixel of the third subset may also be a pixel of the first or second subset. Embedding vectors may be considered as a special case of feature vectors.

According to some embodiments of the method, extracting the signal features comprises applying machine learning to compute a signal feature vector or a signal embedding vector for the respective GNSS signal.

According to some embodiments of the method, processing the image comprises applying machine learning to compute an image feature vector or an image embedding vector for at least the third subset of pixels of the image.

According to some embodiments of the method, the extracted signal features comprise a signal feature vector or a signal embedding vector, the extracted image features comprise an image feature vector or an image embedding vector, combining the extracted signal features and the extracted image features comprises combining the signal feature vector or the signal embedding vector, respectively, with the image feature vector or the image embedding vector, respectively, and the feature combination is a combined feature vector or a combined embedding vector.

According to some embodiments, the method further comprises:
- projecting, based on the orientation of the image and on known satellite positions, at least a subset of the plurality of GNSS satellites onto the image, so that each projected GNSS satellite corresponds to a pixel or a set of coherent pixels of the digital image;
- determining, for at least a plurality of pixels of the image, a potential GNSS signal quality value; and
- assigning to each of the projected GNSS satellites the potential GNSS signal quality value of the corresponding pixel or the corresponding set of coherent pixels.

According to some embodiments of the method, processing the image comprises applying machine learning to compute an image feature vector for at least the third subset of pixels of the image, and the third subset of pixels is defined based on the position of the respective projected GNSS satellite in the image. For instance, the second subset of pixels images obstructions having reflective surfaces, and the third subset of pixels is also defined by positions of the reflective surfaces in the image in relation to the position of the respective projected GNSS satellite in the image.

According to some embodiments, the method further comprises:
- centring, for at least a subset of the plurality of GNSS satellites, the image on one of the subset of GNSS satellites based on the orientation of the image and on known satellite positions;
- determining, for at least a plurality of pixels of the image, a potential GNSS signal quality value; and
- assigning to each of the GNSS satellites of the subset the potential GNSS signal quality value of the pixel or a set of coherent pixels at the centre of the image.

In one embodiment, processing the image comprises applying machine learning to compute an image embedding vector for the image, e.g. wherein the second subset of pixels images obstructions having reflective surfaces.

According to other embodiments of the method, deriving the signal classification and/or the estimated local error is also based on the potential GNSS signal quality values.

In one embodiment, processing the image comprises identifying at least the second subset of pixels in the image (e.g. wherein processing the image comprises using image segmentation), and determining the potential GNSS signal quality value for a GNSS satellite is based on a relative position of the pixel or the set of coherent pixels corresponding to the respective GNSS satellite relative to the second subset of pixels in the image.

According to other embodiments of the method, determining the potential GNSS signal quality value comprises extracting an image feature vector for each GNSS satellite of at least a subset of the projected satellites, the image feature vector comprising the potential GNSS signal quality value, a signal feature vector is generated for the satellite signal of each GNSS satellite of at least the subset of the projected satellites, combining the extracted signal features and the extracted image features comprises combining the image feature vector and the signal feature vector of each GNSS satellite of at least the subset of the projected satellites into a combined feature vector for the respective GNSS satellite, and deriving the signal classification and/or the estimated local error is performed by a classifier module embodied as a neural network or a support vector machine and based on the combined feature vectors of at least the subset of the projected satellites as input.

In one embodiment, combined feature vectors of a plurality of points of time are generated, wherein the classifier module is a recurrent neural network, and for considering a behaviour of the GNSS signals over time, signal classifications and/or estimated local errors at a plurality of points of time are computed by the classifier module based on the combined feature vectors.

According to some embodiments of the method, a signal classification is derived for the GNSS signal of each GNSS satellite of the subset of GNSS satellites, and the geospatial position is computed based on at least a subset of the GNSS signals for which the signal classification is derived and on their respective signal classification. For instance, computing the geospatial position comprises weighting the GNSS signals based on their respective signal classification.

In one embodiment, computing the signal classification comprises detecting multipath signals, non-line-of-sight signals and/or diffraction signals. Optionally, computing the geospatial position comprises downweighting the detected multipath signals, non-line-of-sight signals and/or diffraction signals, respectively. Alternatively, the subset of the GNSS signals from which the geospatial position is computed does not comprise any of the detected multipath signals, non-line-of-sight signals and/or diffraction signals, respectively.

According to some embodiments of the method, an estimated local error is derived for the GNSS signal of each GNSS satellite of the subset of GNSS satellites, and the geospatial position is computed based on the subset of the GNSS signals for which the estimated local error is derived and on their respective estimated local error, wherein the method further comprises:
- projecting, based on the orientation of the image and on known satellite positions, at least a subset of the plurality of GNSS satellites onto the image, so that each projected GNSS satellite corresponds to a pixel or a set of coherent pixels of the digital image;
- determining, for at least a plurality of pixels of the image, a potential GNSS signal quality value; and
- assigning to each of the projected GNSS satellites the potential GNSS signal quality value of the corresponding pixel or the corresponding set of coherent pixels.

According to some embodiments of the method, extracting signal features from a GNSS signal comprises considering further information about the GNSS signal, wherein the further information at least comprises a pseudorange. For instance, the further information also comprises a Doppler shift, a pseudorange standard deviation, a phase standard deviation, a locktime count, a parity, a carrier-to-noise density ratio, a satellite height above ground, a satellite age, a satellite generation and/or a satellite signal history. Alternatively or additionally, each GNSS signal comprises a pseudorandom noise, and each pseudo-random noise is correlated to obtain the pseudorange.

A second aspect of the invention pertains to a system for processing satellite signals to derive a geospatial position, particularly according to the method of the first aspect. The system comprises:
- a GNSS antenna configured to receive GNSS signals from a plurality of GNSS satellites;
- a measurement engine configured to correlate pseudo-random noises of the GNSS signals to obtain pseudoranges;
- a SLAM unit configured to determine an orientation of the imaging device while capturing the image, e.g. using visual SLAM based on image data captured by the imaging device;
- a signal-processing module configured to extract signal features from the GNSS signals;
- an image-processing module configured to process the image to extract image features by using image segmentation, and/or by applying machine learning to compute an image feature vector or an image embedding vector for at least a third subset of pixels of the image, the third subset of pixels being defined based on a position of the respective GNSS satellite;
- a classifier module embodied as a neural network or a support vector machine and configured to derive, based on feature combinations of a plurality of GNSS satellites and by applying machine learning, a signal classification and/or an estimated local error of the respective GNSS signal, each feature combination being a combination of the extracted signal features and the extracted image features of the respective GNSS signal; and
- a positioning engine configured to compute a geospatial position based on a subset of the GNSS signals and/or pseudoranges, wherein the positioning engine is configured to compute the geospatial position based also on the signal classification and/or on the estimated local error for each GNSS signal of the subset.

A third aspect pertains to a computer program product comprising program code which is stored on a machine-readable medium, or being embodied by an electromagnetic wave comprising a program code segment, and having computer-executable instructions for performing, particularly when executed in a system according to the second aspect, the method according to the first aspect of the invention.

The invention in the following will be described in detail by referring to exemplary embodiments that are accompanied by figures, in which:
- Figs. 1a-e: illustrate the problem of NLOS and multipath GNSS signals;
- Fig. 2: shows a flow chart illustrating an exemplary embodiment of a method according to the invention;
- Fig. 3a: shows a panoramic image captured by a camera of an exemplary embodiment of a system according to the invention;
- Fig. 3b: shows a division of the panoramic image according to a classification of a potential signal quality;
- Fig. 4: shows components of an exemplary embodiment of a system according to the invention and data flow between the components;
- Fig. 5: illustrates a setup for training an artificial intelligence of an exemplary embodiment of a system according to the invention; and
- Figs. 6-11: illustrate various operation modes of exemplary embodiments of a system according to the invention.

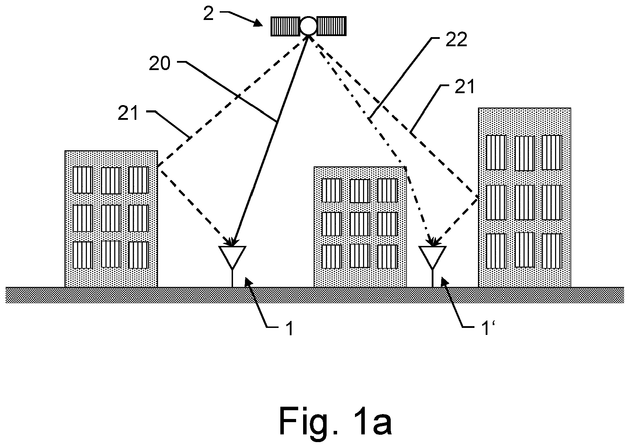

Figures 1a to 1e illustrate the general problem with multipath and non-line-of-sight (NLOS) signals in satellite-based positioning. GNSS signals are essentially electromagnetic wave signals, which are blocked by structures such as buildings and reflected by glass or metal surfaces. Thus, especially in urban environments, GNSS signals suffer from blocking, reflection and attenuation, resulting in diverse received signals, e.g. multipath signals from, both, LOS and NLOS satellites. As a consequence, pseudorange errors may be introduced due to multipath effects, diffraction and NLOS reception of signals, which can cause severe deterioration in positioning or navigation applications.

In Figure 1a a single satellite of a global navigation satellite system (GNSS satellite 2) is shown that provides a signal, which in combination with signals from other GNSS satellites (not shown here) allows deriving a geospatial location. At two positions in an urban environment, an antenna is positioned that is configured to receive the GNSS signals (GNSS antennae 1, 1'). The antenna's task is to determine a current geospatial position, either of itself or of a device it is connected to. For instance, such a device may be a measuring system (e.g. a GNSS pole), a handheld user device (e.g. a smartphone), or a vehicle.

The first GNSS antenna 1 has an LOS reception position. That means that the antenna 1 is positioned relative to the GNSS satellite 2 with a direct line-of-sight (LOS), so that it receives a direct signal 20 from the satellite 2. Additionally, the antenna 1 receives an indirect multipath signal 21 from the same satellite 2. This multipath signal 21 is deflected from a reflective surface of one of the buildings (e.g. from a window) and may negatively affect the determination of the antenna's position.

The second GNSS antenna 1' has an NLOS reception position, i.e. it is positioned relative to the GNSS satellite 2 so that the line-of-sight is blocked. Consequently, to this antenna 1' the satellite 2 is a non-line-of-sight (NLOS) satellite, from which no direct signals can be received. Nonetheless, the antenna 1' receives reflected signals from the NLOS satellite 2, which, if undetected, may negatively affect the determination of the antenna's position. Again, an indirect multipath signal 21 that is deflected from one of the buildings is received. Additionally, the antenna 1' receives a diffraction signal 22 from the top of another building.

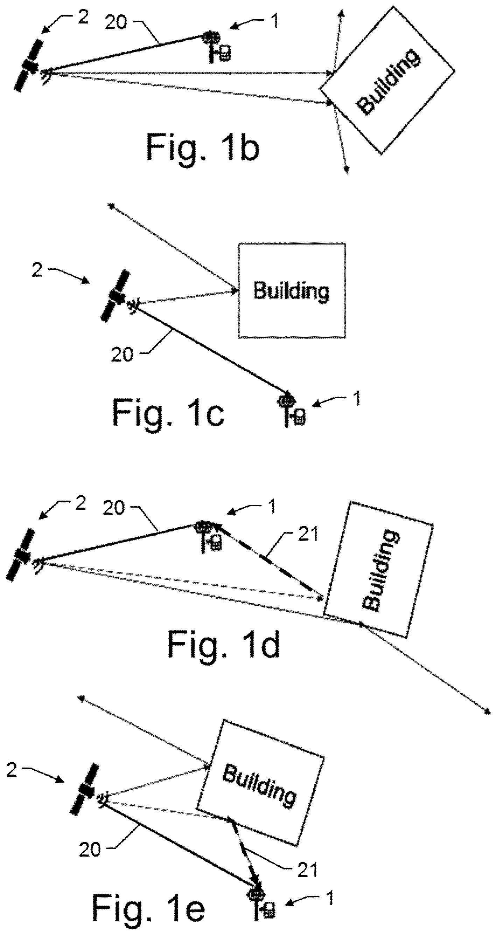

Figures 1b to 1e each show a GNSS antenna 1, a GNSS satellite 2 and a building in a top view. The building's surfaces are capable of deflecting signals from the satellite 2. Depending on the relative position and orientation of the building to the GNSS antenna 1 and satellite 2, the deflection may or may not lead to multipath signals 21 in addition to the direct signals 20.

In Figures 1b and 1c, the GNSS antenna 1 receives only a direct signal 20 from the GNSS satellite 2. In Figures 1d and 1e, the respective building's different orientation leads to signal deflections towards the GNSS antenna 1, so that the antenna 1 receives a multipath signal 21 in addition to the direct signal 20.

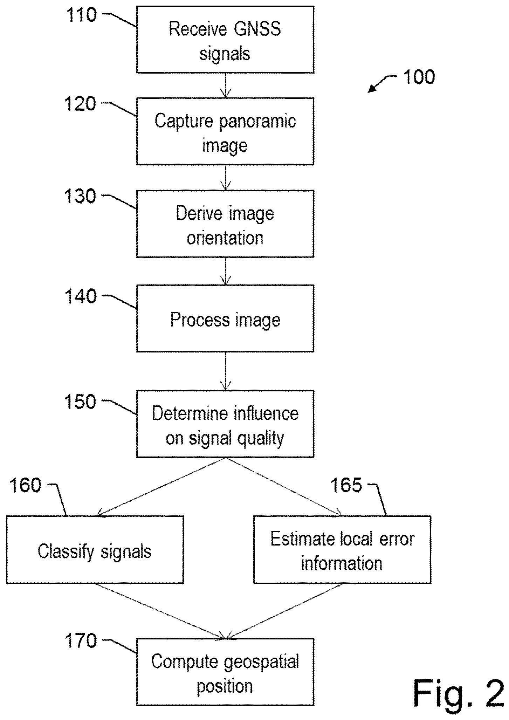

Figure 2 shows a flowchart illustrating steps of an exemplary embodiment of a method 100 for processing satellite signals to derive a geospatial position according to the invention.

For each satellite of a plurality of GNSS satellites, one or more signals are received 110 by a GNSS antenna. From each satellite slightly different frequencies (bands) may be received, furthermore different satellite constellations (GPS, GLONASS, GALILEO ...) operate at different frequencies.

A camera, for instance a panoramic camera mounted to the GNSS antenna or to the device comprising the GNSS antenna, captures 120 a panoramic image that is (at least partially) oriented toward the plurality of GNSS satellites. Some parts of the image will image the sky, and other parts will image obstructions that are impermissible to GNSS signals. This allows "seeing" the environment.

An orientation of the camera (or image) is derived 130, e.g. determined or estimated. If the position and orientation of the whole GNSS system is known from measurements, the orientation of the camera in the GNSS system, and thus of the image, is known as well. For instance, deriving 130 the orientation of the camera/image may involve using a SLAM algorithm. With the image orientation being known, the satellite positions in the sky can be mapped onto the image, and it can be determined with relatively simple processing 140 whether the satellites are located in clear sky, covered by an object or partially blocked, e.g. behind tree canopy. This is described, e.g., in US 2022/0018973 A1.

The present application proposes an algorithm that does not simply segment the image but is trained in an end-to-end fashion to implicitly learn and understand relevant physical and geometrical characteristics of the surrounding and their effect on the signal quality. These characteristics may be based on depth images or on depth estimation, e.g. using an additional monocular depth estimation algorithm.

Furthermore, in a hybrid approach, physical information from the signal itself is processed simultaneously. Generally, multipath and NLOS signals may be detected either from GNSS observations such as pseudoranges and carrier-to-noise ratios (CNR or carrier-to-noise density ratios) or by integrating discriminators directly into the signal-tracking loops to detect multipath and NLOS signals from the results of the signal correlation outputs. The proposed solution goes a step further: instead of performing a simple classification, machine learning is applied to determine 150, which features in the surrounding influence the signal's quality and to which extent.

Thus, it is not only possible to detect NLOS signals but further classify 160 all received signals (i.e. including LOS signals) with respect to their error or error probability. This classification can be binary (e.g. low multipath error vs. high multipath error) or finer graded. In some embodiments, the machine learning algorithm may be used to estimate 165 the local error for each satellite. Usually, the local error is mainly based on multipath error but may also include errors due to diffraction. For instance, the local error may be modelled as a regression problem.

The machine learning may be trained to recognize the relevant features from several inputs, i.e. the GNSS signals (including pseudorange, carrier-to-noise ratio, Doppler shift etc.), the panoramic image, the orientation estimate, and the known positions of the satellites.

Using the received GNSS signals and either the signals' classification or their local error, the geospatial position can be computed 170 with high precision.

Optionally, AI-models can be applied dependent on a present surrounding and/or on a measurement history. Such a system needs to be aware of its current surrounding. For instance, a camera of the system provides images that allow an ML classifier to identify the surrounding scene in real-time, e.g. as "surrounded by sky scrapers in an inner city" or as "within a forest". Such an image may be a panoramic image captured 120 in the course of the method described with respect to Figure 2 or an additional image. A camera and/or means for distance assessment with respect to the system's surrounding allow for real-time ML classification of scenes such as "within less than a meter away from a reflecting wall" or "position under canopy". Alternatively, the system may be configured to assess the current situation and its similarity with respect to situations in the past. This may include situations of the same device as well as other devices and situations at the same location or at other locations. For instance, this may include a history of trajectories or statistics on available satellites and their properties, such as a height above ground. This situation-awareness could then be used to run situation-aware machine-learning models on the system. This may allow a processing, which in a given hybrid approach depending on the current scene's class puts more (or less) weight on image than on the time series-based ML model. This may also allow a processing with distinct ML models for inner city, roadside and forest environments. This may allow a processing, which only takes satellites above a certain height above ground into account.

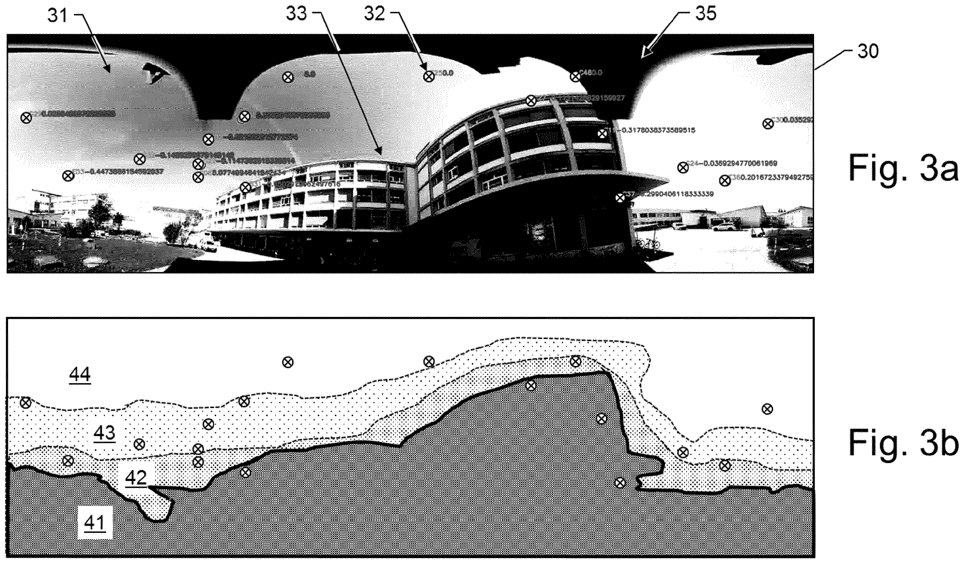

Figures 3a and 3b further illustrate the step of image processing. Figure 3a shows a panoramic image 30 showing the sky 31 in the background and buildings posing signal-blocking obstructions 33 in the foreground. Depending on the specific camera positions on the GNSS device, some obstructions 35 in the image may be caused by the GNSS device itself. In the shown example, also the positions 32 of the GNSS satellites are projected into the image.

The panoramic image is processed with an image-based AI module to obtain embeddings that can then be used in a second AI module. The image-based AI module in particularly is embodied as a neural network. The obtained embeddings encode for each pixel of the image and, as a result, for each position in the sky 31 the potential signal quality of a satellite located in that area.

Such a model is trained on collected data where satellites and their local error (e.g. calculated as "double difference residual" or "single difference residual") are mapped into the image. The model is then trained to predict this local error. Since there is very sparse information per pixel and image, plenty of training data is required. Such data may be acquired by using two or more reference rovers, i.e. one rover in the field comprising the panoramic camera that is tracked by a laser tracker to obtain ground truth information.

Figure 3b shows an example of embeddings of the potential signal quality obtained from the panoramic image 30 of Figure 3a. The embeddings include four signal classifications 41-44 ranging from "blocked" 41 and "poor" 42 to "fair" 43 and "good" 44. Each of the satellites can thus be assigned one of the four classifications 41-44.

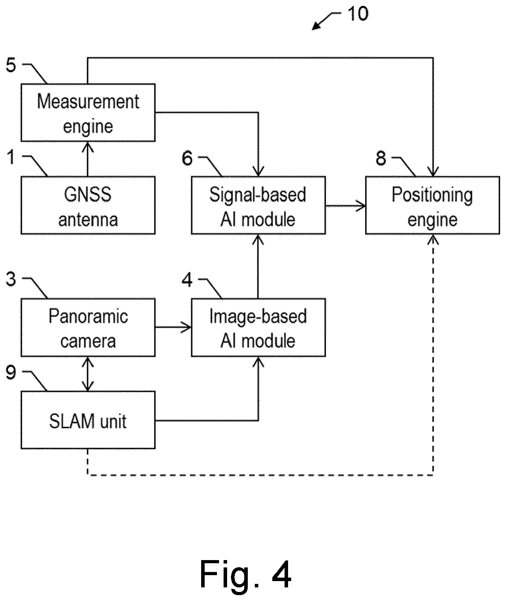

Figure 4 illustrates a data flow between the components of an exemplary embodiment of a system 10 according to the invention. The system comprises a GNSS antenna 1 that receives "raw" GNSS signals from a plurality of GNSS satellites (not shown here), the "raw" signals comprising pseudorandom noise. The GNSS antenna 1 provides the GNSS signals to a measurement engine 5, which processes the signals. Correlators within the measurement engine 5 correlate the pseudorandom noises to obtain pseudoranges. Processing of the GNSS signals thus produces an output that comprises the pseudoranges and in some embodiments may also comprise a carrier-to-noise ratio (CNR), a Doppler shift, a pseudorange standard deviation, a phase standard deviation, a locktime count, or a parity.

The output of the measurement engine 5 is provided to a positioning engine 8, which is configured to compute and output a geospatial position based thereon.

To improve the precision of the computed geospatial position also in difficult surroundings that comprise multipath and NLOS signals, e.g. urban environments, a system 10 according to the invention comprises further components. These include a digital panoramic camera 3 that captures panoramic images while oriented at least partially towards the satellites, e.g. as a video stream. A SLAM unit 9 determines the camera's orientation while capturing these images. The image data and orientation are provided to an image-based AI module 4.

As already described above with respect to Figure 3b, the image-based AI module 4 may be embodied as a neural network. The image-based AI module 4 processes the panoramic image to obtain embeddings, which encode a potential signal quality per pixel. Alternatively, the embeddings may encode the potential signal quality per satellite. Thus, the signal quality of a satellite, a position of which corresponds to a certain pixel or group of pixels of the image can be classified. Optionally, the embeddings need not be obtained for all image pixels, for instance, those parts of the image that are obstructed by a part of the system itself, e.g. by the GNSS antenna mounted above the camera, may be recognized and ignored during image processing. Also, a horizon may be determined, and embeddings are obtained only for those pixels that lie above the horizon in the image. For instance, as illustrated in Figure 3b, the embeddings may include four signal classifications "blocked", "poor", "fair" and "good" that can be assigned to the satellites.

The system 10 further comprises a signal-based AI module 6 that may be or comprise a support vector machine or a second neural network. The signal-based AI module 6 receives the output of the measurement engine 5, for instance pseudoranges, CNR and Doppler shift for each satellite and channel, together with the embeddings obtained in the image-based AI module 4. The output of the measurement engine 5 and the embeddings of the image-based AI module 4 are processed together in the signal-based AI module 6, and based thereon, further information on the signal quality is derived. This information may comprise a classification of the signal or a regression of its actual error.

In conjunction with the position of the satellite in the sky it is possible to correlate and weight these two features set in a single neural network to predict the signal quality. This is done for every satellite individually. The satellites can be processed per epoch at once or sequentially and one band or multiple frequency bands can be used.

The derived regression or signal quality of each satellite is then provided to the positioning engine 8. The signal quality may be used by positioning engine 8 to exclude certain satellite signals from consideration or to weight the satellite signals based on their signal quality, i.e. giving satellite signals with a high quality more weight than those with a low quality. As a result, multipath or NLOS signals will be recognized as low-quality signals and either not be used at all or given less weight (downweighting), so that the positioning is improved. Downweighting could be done by a fixed factor, it could also be situation-specific. The less satellite signals can be received in total in any scenario, the more careful one has to be in discarding them. When still plenty of good LOS satellites remain, any multipath and NLOS signals can be discarded. However, in difficult situations even a bad signal can still be beneficial and should/could be considered - but downweighted - in the final positioning solution. The regression of the actual error may be used to correct or improve the positioning even if multipath or NLOS signals have been used. For instance, if the error can be accurately regressed, each signal may be weighted by 1/"estimated error", i.e. the higher the error, the lower the weight.

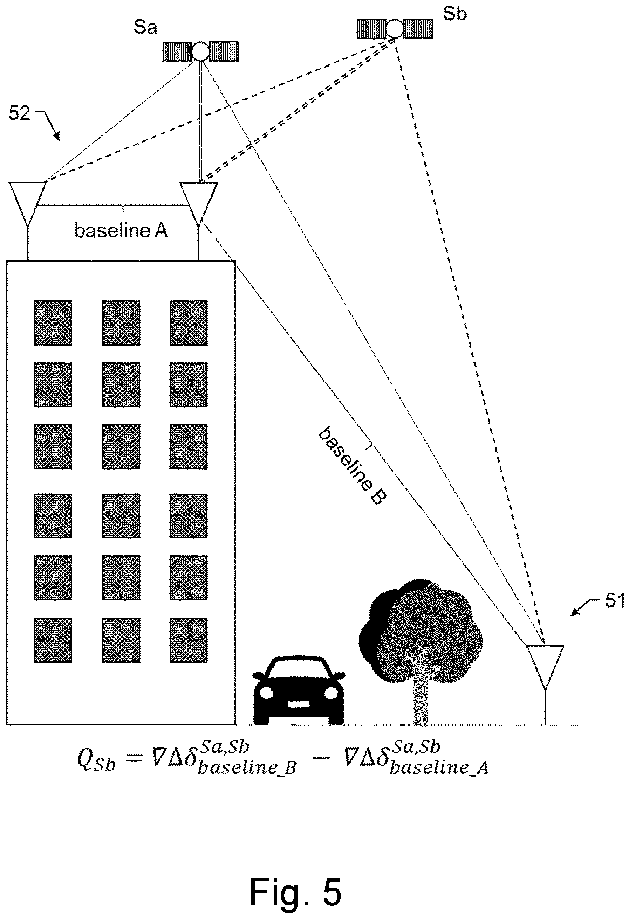

Figures 5 illustrates training the image-based AI module of the exemplary system of Figure 4. In a high-multipath-error environment 51, e.g. between high buildings and/or under trees, a GNSS RTK rover (e.g. a Leica GS 18) comprising a GNSS antenna, a measurement engine and a panoramic camera receives GNSS signals including pseudorandom noise from satellites Sa, Sb. These GNSS signals are transformed into pseudoranges by the measurement engine. The camera captures a 360° video of the environment, while an orientation and position of the rover is statically fixed or continuously monitored, e.g. tracked by a laser tracker (not shown here). The pseudoranges, the video and the orientation and position are provided as input to a machine-learning model.

In a low-multipath-error environment 52, e.g. on top of one of the high buildings surrounding the first rover, two rovers of the same kind are provided as reference. Pseudoranges from the first rover and from the two reference rovers are provided to a GNSS data analysis software that allows quality control and performance analysis of GNSS reference station networks, for instance Leica "SpiderQC" GNSS Data Analysis Software. The software computes local error (residuals) due to multipath and diffraction and provides these to the machine-learning model.

With known positions of the three rovers, and thus known baselines A, B between them, it is possible to derive the signal quality Q of the satellites in a generally known manner, e.g. by differencing.

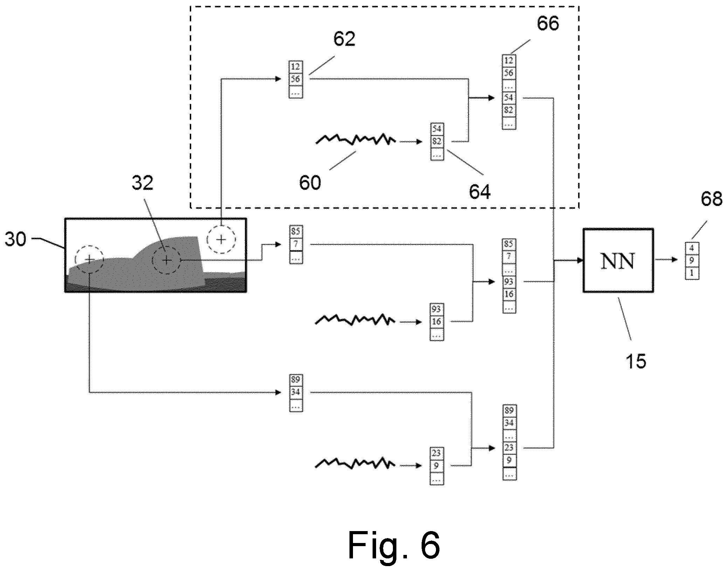

Figures 6 to 11 illustrate several operating modes of exemplary embodiments of a system according to the invention. Figure 6 shows a first operating mode. For clarity reasons the mode is illustrated for one of only three satellites. However, in reality a multitude of satellites may be used.

Using an image 30 with the satellites' positions 32 projected into, it is possible to extract features from the image for every satellite. In the shown embodiment this is done by using hand-crafted features. The features may be extracted as a feature vector 62, i.e. as an abstract description of the feature's surrounding in the image 30 - for instance comprising a distribution of colours and brightness values in an area of, e.g., about 30×30 pixels around the feature.

The extracted feature vector 62 can thus be fused with a hand-crafted feature vector 64 (describing features of the signal) for each satellite signal 60 into a combined feature vector 66. The combined feature vector 66 comprises the values of both the image feature vector 62 and the signal feature vector 64. This is repeated for each of the satellites, so that a set of combined feature vectors 66 from a plurality of satellites results. This set of combined feature vectors 66 can then be fed into a further module 15 ("classifier module") to regress a signal classification 68, i.e. a "signal quality per satellite" value.

Alternatively or additionally, a local error per satellite can be estimated. Ideally, signal quality is an estimated local error, i.e. an error caused by multipath and diffraction. In another embodiment, the signal quality is just a classification, e.g. into "good"/"bad", "NLOS"/"LOS", "good"/"medium"/"bad" or "NLOS"/"High MP"/"Low MP". In another embodiment, there can be multiple signals and feature vectors from the signal per satellite. That is, individual feature vectors per satellite and frequency band are calculated. In the embodiment depicted in Figure 6, only one (joint) signal feature vector 66 is calculated per satellite.

As shown here, the module 15 can be or comprise a neural network (NN). Alternatively, it may comprise a traditional machine-learning (ML) algorithm such as a random forest or a support vector machine (SVM). The signal classification 68 (or the estimated local error) may then be provided to the positioning engine for computing the geospatial position based at least on a subset of the GNSS signals and on the respective signal classifications (or the respective estimated local errors). For instance, the signal classification 68 may be used for weighting each of the signals, and the local errors may be used directly for correcting the computed position.

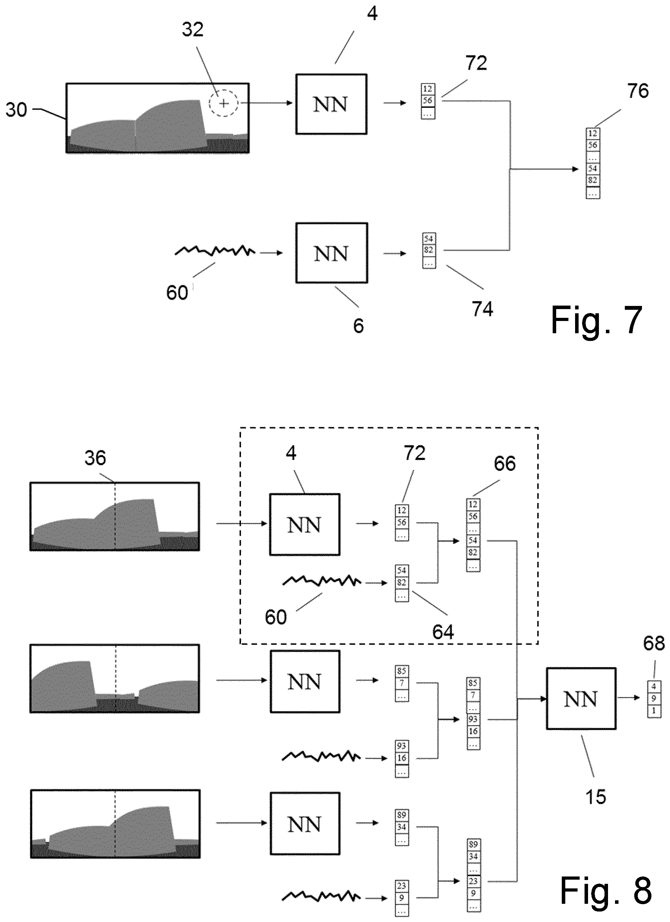

Figure 7 shows a second operating mode, which is a modification of the first mode. This modification is only illustrated for a first satellite (i.e. for the section marked by dashed lines in Figure 6). In this embodiment, the hand-crafted image and/or signal features 62, 64 are replaced by a neural network 4, 6 each. A first neural network 4 (image-base neural network) is trained on the image 30, and a second neural network 6 (signal-based neural network) is trained on the signal 60. The image-base neural network 4 generates an embedding vector 72 from the image 30, whereas the signal-based neural network 6 generates an embedding vector 74 from the signal 60. The two embedding vectors 72, 74 can then be fused into a combined embedding vector 76 for the respective projected satellite. For instance, this fusing may be performed by either of the two neural networks 4, 6. Also transformer architectures, e.g. as software over the air (SOTA), can be used for the integration of signal and image features.

Similarly to the first embodiment, a set of combined embedding vectors 76 from a plurality of satellites can then be fed into a neural network to regress a "signal quality per satellite" value. Alternatively or additionally, a local error per satellite can be estimated. Embedding vectors 72, 74 may be considered as a special case of feature vectors. In particular, the image embedding vectors 72 are generated for the whole image. Considering the satellites' positions and the obstacles in the image, the image embedding vectors 72 may also describe where reflections of GNSS signals could occur.

Figure 8 shows a third operating mode. According to this embodiment, the image 30 - being a 360° equirectangular projection - is rotated such that the centre 36 of the image is aligned with one of the satellites' azimuth. Therefore, it is not necessary to decode the satellite position into the image but rather generate individual images (from the same equirectangular projection) for each satellite. An image-based neural network 4 is then used to generate an embedding vector 72 for the satellite from the image 30. For the signal 60, handcrafted features 64 can be used, as shown with respect to the first embodiment of the system. Alternatively, as shown with respect to the second embodiment of the system, a signal-based neural network 6 can be used.

Centring the image on a satellite may include either considering or neglecting the satellite's elevation. If the elevation is neglected, it cannot be derived from the input image 30 directly, and needs to be derived from the signal 60 instead. This involves measuring a Doppler frequency shift of the signal: The higher the Doppler frequency shift in the signal, the faster the GNSS satellite moves relative to the GNSS antenna receiving its signal 60. Satellites near the horizon move faster than satellites near the zenith. Consequently, the faster the GNSS satellite, the lower its position in the image. Thus, the higher the measured Doppler frequency shift in the signal, the lower is the satellite's position in the image. This implicit approach allows assigning a pixel of the image - and thus of a potential GNSS signal quality value - with sufficient accuracy to obtain the signal classification 68 or estimate the local error.

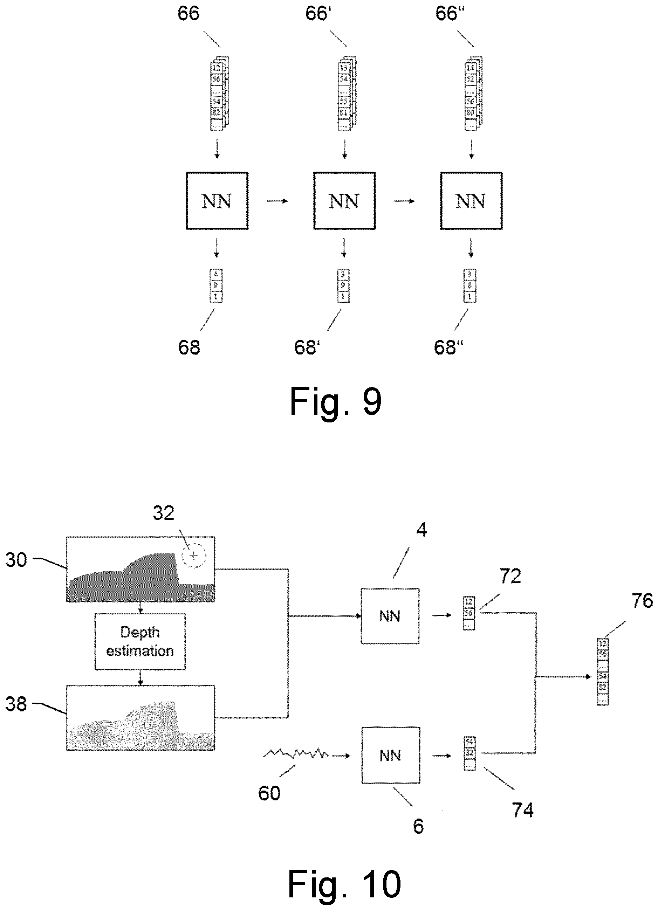

Figure 9 shows a fourth embodiment of the system. Here, the behaviour of the signals over time is considered by using a recurrent neural network (RNN) or other recurrent architecture such as a long short-term memory (LSTM). Also transformer architectures, e.g. as software over the air (SOTA), can be used for processing sequences of data. The combined feature vectors 66, 66', 66'' (which might be obtained as described with respect to any one of Figures 6, 7 or 8) will be processed by the RNN (instead of a "traditional" neural network as sketched previously) to obtain values 68, 68', 68'' for the signal quality per satellite at several points of time (t₀, t₁, t₂). The combined feature vectors at to (66), at ti (66') and at t₂ (66") are fed into the recurrent neural network to obtain the signal quality per satellite at to (68), at ti (68') and at t₂ (68").

Summarizing, Figures 6 to 9 show four exemplary embodiments or modifications of an operating mode with combined feature vectors (e.g. hand-crafted), combined embeddings vectors (e.g. neural-network-generated), panorama centring by satellite azimuth, and time-behaviour capturing by RNNs. Multiple possible signal quality metrics can be predicted, for instance local error (regression) or classification (e.g. binary or three-class).

Additionally, the image features themselves can be augmented by depth estimation and/or semantic-segmentation masks. This provides geometrical characteristics of surrounding surfaces. Dedicated neural network can be trained accordingly.

Figure 10 shows a fifth exemplary operating mode. In addition to the neural-network-generated or hand-crafted features and embeddings described above, depth estimation can be performed to compute geometrical features based on the image 30, resulting in a depth or depth-estimate image 38. For instance, a dedicated neural network can be trained to perform monocular depth estimation. Alternatively, the image 30 may be captured as a depth image. The resulting depth or depth-estimate image 38 serves as additional input layer to the image 30, which can be used by the neural network 4 to generate better image embeddings 72.

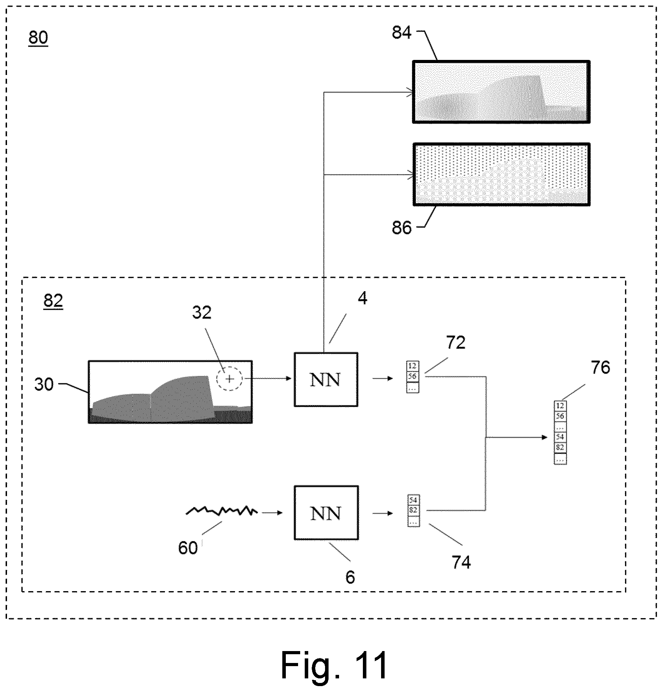

Figure 11 shows a sixth operating mode. In this embodiment, instead of using a dedicated neural network to perform depth estimation (as used in the fifth embodiment of Figure 10) only one image-related neural network 4 is used (as in the second embodiment of Figure 7). However, during training 80 of the neural network 4, different losses can be used to explicitly force the neural network 4 to learn semantic-segmentation features 86 and/or depth-estimation features 84 such that these features are obtained as part of the embedding vector 72. In the previous embodiments, a signal classification loss 82 could be used for direct training. The signal classification loss 82 is (as described with respect to the first embodiment of Figure 6), a local error loss (e.g. MSE on the local error for each satellite/signal) or a classification loss for a binary or three-class classification problem (e.g. cross-entropy loss). In the embodiment shown here, for some epochs during training a loss based on semantic segmentation labels and/or depth estimates is selected.

Optionally, outlier-based training may be performed up-front and/or on-the-fly. Rather than explicitly requiring ground truth, the training of ML models can take place based on sensitivities of each GNSS signal's contribution to the system's overall positioning accuracy. In situations where many satellite signals are present, the impact of individual signals (or groups of signals from few satellites with similar properties, e.g. nearby satellites or ones at comparable height over ground) onto the positioning accuracy is evaluated by turning these signals "on" or "off". For instance, a small effect yields a label "reliable signal", whereas a large impact yields a label "outlier". These labels (jointly with time series and image data) are used in a training and evaluation pipeline of an end-to-end ML model, either upfront of its deployment, and/or on deployed ML models for re-training or fine-tuning purposes.

Although the invention is illustrated above, partly with reference to some preferred embodiments, it must be understood that numerous modifications and combinations of different features of the embodiments can be made. All of these modifications lie within the scope of the appended claims.

## Claims

1. Computer-implemented method (100) for processing satellite signals to derive a geospatial position, particularly fully automatically and in real time, the method (100) comprising
- receiving (110), via a GNSS antenna (1), a plurality of GNSS signals (20-22, 60) from a plurality of GNSS satellites (2);
- capturing (120) a digital image (30) using an imaging device (3) at least partially oriented toward the plurality of GNSS satellites (2), the digital image (30) comprising a multitude of pixels, a first subset of pixels imaging the sky (31), and a second subset of pixels imaging obstructions (33) that are at least partly impermissible to GNSS signals and/or have reflective surfaces;
- determining (130) an orientation of the image (30); and
- computing (170) a geospatial position,
**characterized in that**
the method (100) further comprises, for each of at least a subset of the plurality of GNSS satellites (2),
- extracting signal features (64, 74) from the respective GNSS signal (20-22, 60);
- processing (140) the image (30) to extract image features (62, 72), wherein processing the image comprises
- using image segmentation, and/or
- applying machine learning to compute an image feature vector (62) or an image embedding vector (72) for at least a third subset of pixels of the image (30), the third subset of pixels being defined based on a position of the respective GNSS satellite (2);
- combining the extracted signal features (64, 74) and the extracted image features (62, 72) to receive a feature combination (66, 76); and
- deriving (160, 165), based on feature combinations (66, 76) of a plurality of GNSS satellites (2) and by applying machine learning, a signal classification (68) and/or an estimated local error of the respective GNSS signal (20-22, 60),
wherein computing (170) the geospatial position is based at least on a subset of the GNSS signals (20-22, 60) and on the signal classification (68) and/or the estimated local error of each GNSS signal (20-22, 60) of the subset.

2. Method (100) according to claim 1, wherein extracting the signal features (64, 74) comprises applying machine learning to compute a signal feature vector (64) or a signal embedding vector (74) for the respective GNSS signal (20-22, 60).

3. Method (100) according to claim 1 or claim 2, wherein processing (140) the image comprises applying machine learning to compute an image feature vector (62) or an image embedding vector (72) for at least the third subset of pixels of the image (30).

4. Method (100) according to any one of the preceding claims, wherein
- the extracted signal features (64, 74) comprise a signal feature vector (64) or a signal embedding vector (74);
- the extracted image features (62, 72) comprise an image feature vector (62) or an image embedding vector (72);
- combining the extracted signal features (64, 74) and the extracted image features (62, 72) comprises combining the signal feature vector (64) or the signal embedding vector (74), respectively, with the image feature vector (62) or the image embedding vector (72), respectively; and
- the feature combination is a combined feature vector (66) or a combined embedding vector (76).

5. Method (100) according to any one of claims 1 to 4, comprising
- projecting, based on the orientation of the image and on known satellite positions, at least a subset of the plurality of GNSS satellites (2) onto the image (30), so that each projected GNSS satellite (2) corresponds to a pixel or a set of coherent pixels of the digital image (30);
- determining (150), for at least a plurality of pixels of the image (30), a potential GNSS signal quality value (41-44); and
- assigning to each of the projected GNSS satellites (2) the potential GNSS signal quality value (41-44) of the corresponding pixel or the corresponding set of coherent pixels.

6. Method (100) according to claim 5, wherein
- processing (140) the image comprises applying machine learning to compute an image feature vector (62) for at least the third subset of pixels of the image (30); and
- the third subset of pixels is defined based on the position (32) of the respective projected GNSS satellite (2) in the image (30),
particularly wherein the second subset of pixels images obstructions (33) having reflective surfaces, and the third subset of pixels is also defined by positions of the reflective surfaces in the image (30) in relation to the position (32) of the respective projected GNSS satellite (2) in the image (30).

7. Method (100) according to any one of claims 1 to 4, comprising
- centring, for at least a subset of the plurality of GNSS satellites (2), the image (30) on one of the subset of GNSS satellites (2) based on the orientation of the image and on known satellite positions;
- determining (150), for at least a plurality of pixels of the image (30), a potential GNSS signal quality value (41-44); and
- assigning to each of the GNSS satellites (2) of the subset the potential GNSS signal quality value (41-44) of the pixel or a set of coherent pixels at the centre of the image (30).

8. Method (100) according to claim 7, wherein processing (140) the image comprises applying machine learning to compute an image embedding vector (72) for the image (30), particularly wherein the second subset of pixels images obstructions (33) having reflective surfaces.

9. Method (100) according to any one of claims 5 to 8, wherein deriving (160, 165) the signal classification (68) and/or the estimated local error is also based on the potential GNSS signal quality values (41-44).

10. Method (100) according to claim 9, wherein
- processing (140) the image (30) comprises identifying at least the second subset of pixels in the image (30), particularly wherein processing (140) the image comprises using image segmentation; and
- determining (150) the potential GNSS signal quality value (41-44) for a GNSS satellite (2) is based on a relative position of the pixel or the set of coherent pixels corresponding to the respective GNSS satellite relative to the second subset of pixels in the image (30).

11. Method (100) according to claim 5, wherein
- determining (150) the potential GNSS signal quality value (41-44) comprises extracting an image feature vector (62) for each GNSS satellite (2) of at least a subset of the projected satellites, the image feature vector (62) comprising the potential GNSS signal quality value (41-44);
- a signal feature vector (64) is generated for the satellite signal (60) of each GNSS satellite (2) of at least the subset of the projected satellites;
- combining the extracted signal features and the extracted image features comprises combining the image feature vector (62) and the signal feature vector (64) of each GNSS satellite (2) of at least the subset of the projected satellites into a combined feature vector (66) for the respective GNSS satellite (2); and
- deriving (160, 165) the signal classification (68) and/or the estimated local error is performed by a classifier module (15) embodied as a neural network or a support vector machine and based on the combined feature vectors (66) of at least the subset of the projected satellites as input.

12. Method (100) according to claim 11, wherein
- combined feature vectors (66, 66', 66'') of a plurality of points of time (t₀, t₁, t₂) are generated;
- the classifier module (15) is a recurrent neural network; and
- for considering a behaviour of the GNSS signals over time, signal classifications (68, 68', 68'') and/or estimated local errors at a plurality of points of time (t₀, t₁, t₂) are computed (160, 165) by the classifier module (15) based on the combined feature vectors (66, 66', 66'').

13. Method (100) according to any one of the preceding claims, wherein
- a signal classification (68) is derived (160) for the GNSS signal (20-22, 60) of each GNSS satellite (2) of the subset of GNSS satellites; and
- the geospatial position is computed (170) based on at least a subset of the GNSS signals (20-22, 60) for which the signal classification (68) is derived (160) and on their respective signal classification (68),
particularly wherein computing (170) the geospatial position comprises weighting the GNSS signals (20-22, 60) based on their respective signal classification (68).

14. Method (100) according to claim 13, wherein computing (160) the signal classification (68) comprises detecting multipath signals, non-line-of-sight signals and/or diffraction signals, particularly wherein
- computing (170) the geospatial position comprises downweighting the detected multipath signals, non-line-of-sight signals and/or diffraction signals, respectively; or
- the subset of the GNSS signals (20-22) from which the geospatial position is computed (170) does not comprise any of the detected multipath signals, non-line-of-sight signals and/or diffraction signals, respectively.

15. Method (100) according to any one of the preceding claims, wherein
- an estimated local error is derived (165) for the GNSS signal (20-22, 60) of each GNSS satellite (2) of the subset of GNSS satellites; and
- the geospatial position is computed (170) based on the subset of the GNSS signals (20-22, 60) for which the estimated local error is derived (165) and on their respective estimated local error, wherein the method comprises
- projecting, based on the orientation of the image and on known satellite positions, at least a subset of the plurality of GNSS satellites (2) onto the image (30), so that each projected GNSS satellite (2) corresponds to a pixel or a set of coherent pixels of the digital image (30);
- determining (150), for at least a plurality of pixels of the image (30), a potential GNSS signal quality value (41-44); and
- assigning to each of the projected GNSS satellites (2) the potential GNSS signal quality value (41-44) of the corresponding pixel or the corresponding set of coherent pixels.

16. Method (100) according to any one of the preceding claims, wherein extracting signal features (64, 74) from a GNSS signal (20-22, 60) comprises considering further information about the GNSS signal (20-22, 60), wherein the further information at least comprises a pseudorange, particularly wherein
- the further information also comprises a Doppler shift, a pseudorange standard deviation, a phase standard deviation, a locktime count, a parity, a carrier-to-noise density ratio, a satellite height above ground, a satellite age, a satellite generation and/or a satellite signal history; and/or
- each GNSS signal (20-22, 60) comprises a pseudorandom noise, and each pseudo-random noise is correlated to obtain the pseudorange.

17. System (10) for processing satellite signals to derive a geospatial position, particularly according to the method (100) of any one of the preceding claims, the system comprising
- a GNSS antenna (1) configured to receive (110) GNSS signals (20-22, 60) from a plurality of GNSS satellites (2);
- a measurement engine (5) configured to correlate pseudo-random noises of the GNSS signals (20-22, 60) to obtain pseudoranges; and
- a positioning engine (8) configured to compute (170) a geospatial position based on a subset of the GNSS signals (20-22, 60) and/or pseudoranges,
**characterized by**
- a SLAM unit (9) configured to determine (130) an orientation of the imaging device (3) while capturing the image (30), particularly using visual SLAM based on image data captured by the imaging device (3);
- a signal-processing module (6) configured to extract signal features (64, 74) from the GNSS signals (20-22, 60);
- an image-processing module (4) configured to process (140) the image (30) to extract image features (62, 72) by using image segmentation, and/or by applying machine learning to compute an image feature vector (62) or an image embedding vector (72) for at least a third subset of pixels of the image (30), the third subset of pixels being defined based on a position of the respective GNSS satellite (2); and
- a classifier module (15) embodied as a neural network or a support vector machine and configured to derive (160, 165), based on feature combinations (66, 76) of a plurality of GNSS satellites (2) and by applying machine learning, a signal classification (68) and/or an estimated local error of the respective GNSS signal (20-22, 60), each feature combination (66, 76) being a combination of the extracted signal features (64, 74) and the extracted image features (62, 72) of the respective GNSS signal (20-22, 60);
wherein the positioning engine (8) is configured to compute (170) the geospatial position based also on the signal classification (68) and/or on the estimated local error for each GNSS signal (20-22, 60) of the subset.

18. Computer program product comprising program code which is stored on a machine-readable medium, or being embodied by an electromagnetic wave comprising a program code segment, and having computer-executable instructions for performing, particularly when executed in a system (10) according to claim 17, the method (100) according to any one of claims 1 to 16.
